# EUROPEAN PATENT APPLICATION

(11) **EP 1 038 720 A2**
(43) Date of publication of application: **27.09.2000**
(21) Application number: 00201071.8
(22) Date of filing: 23.03.2000
(51) Int. Cl.: B60K 26/02

(54) **Vehicle pedal box**

(30) Priority: 25.03.1999 GB 9906821
(71) Applicant: BCK Technology Limited, Scunthorpe, North Lincolnshire DN15 1ZZ (GB)
(72) Inventor: Thistleton, John Stuart, Southrey, Nr. Lincoln LN3 5TD (GB)
(74) Representative: Long, Edward Anthony

(57) **Abstract**

A pedal box for a vehicle, comprises a pedal pivot (A); means to bias the pedal pivot (A) from pivotal location within the pedal box; displaceable latching means (C) operative, in a non-displaced condition, to resist said bias during normal operating conditions of the pedal box, and in a displaced condition to permit ejection of the pedal pivot (A) from the pedal box; means to secure the pedal box to a portion of the vehicle designed to deform upon a frontal impact, and means to secure the latching means to a portion of the vehicle designed to minimise deformation upon a frontal impact, whereby relative movement, upon a frontal impact, between the deformable and minimal deformable portions results in said displacement of the latching means (C).

## Description

### BACKGROUND OF INVENTION

This invention relates to a vehicle pedal box, being a unit which houses and/or supports, for pivotal movement, both a clutch and a brake pedal, but clearly may house or support only a brake pedal in respect of a vehicle with an automatic gearbox.

With improvements in other aspects of passive safety in passenger vehicles the desire to minimise secondary injuries to both passengers and drivers in the event of an accident, has increased.

### OBJECT OF INVENTION

A basic object of the invention is to provide a vehicle pedal box in which, in the event of a frontal impact accident, lower limb injuries to drivers caused by foot operated pedals is reduced or eliminated by a combination of removing such pedal(s) from danger zone, or reducing the load they can apply to the driver's lower limbs.

### SUMMARY OF INVENTION

According to a first aspect of the invention, there is provided a pedal box for a vehicle, comprising:
**(i)** a pedal pivot;
**(ii)** means to bias the pedal pivot from pivotal location within the pedal box;
**(iii)** displaceable latching means operative, in a non-displaced condition, to resist said bias during normal operating conditions of the pedal box, and in a displaced condition to permit ejection of the pedal pivot from the pedal box;
**(iv)** means to secure the pedal box to a portion of the vehicle designed to deform upon a frontal impact, and
**(v)** means to secure the latching means to a portion of the vehicle designed to minimise deformation upon a frontal impact.
whereby relative movement, upon a frontal impact, between the deformable and minimal deformable portions results in said displacement of the latching means.

Thus, if the ejection direction is arranged to be upwardly and towards the driver, or generally so, the pedal pivot, and with it the brake pedal and any clutch pedal are displaced, within limits, so as to obviate, or minimise lower limb injuries to drivers in the event of a frontal impact.

### SUMMARY OF ANOTHER ASPECT OF THE INVENTION

According to a second aspect of the invention, there is provided a motor vehicle comprising a pedal box in accordance with the first aspect, with the pedal box secured to a portion of the vehicle that is designed to deform or crumple and move towards the driver in the event of a frontal impact, with the latching means connected to a portion of the vehicle that is designed to minimise deformation and to remain stable in the event of a frontal impact, whereby relative deformation upon frontal impact results in displacement of the latching means permitting ejection of the pedal pivot from its pivotal location within the pedal box by its biassing means.

### PREFERRED FEATURES OF THE INVENTION

The pedal box comprises a pair of spaced-apart sidewalls.

A journal notch for the pedal pivot is provided in each sidewall on a common axis, the pedal pivot spanning the sidewalls and being pivotally located in the journal notches.

The means to bias the pedal pivot is effective in an ejecting direction, out of the journal notches.

In a first embodiment, the latch member, comprises at least one fork element adapted to engage the pedal pivot to retain the pedal pivot in its journal notches, against the action of the bias means, during normal operation; the latch member being attached to the sidewalls and additionally, in use, attached to a structure of a vehicle in which the pedal box is installed, which structure is designed for minimal deformation.

The journal notches are upwardly open and the fork element(s) of the latch member embrace the pedal pivot either from the side, or from above, to achieve pedal pivot retention, in normal conditions.

The latch member is provided with two spaced-apart fork members.

The biassing means is at least one spring, preferably a coil spring used in tension or in compression.

The minimal deformation portion of the vehicle is a cross-beam or cowl.

The deforming portion is the dash.

In a second embodiment, the latching means is joined to a cam member (by shearable rivets) adapted to engage the pedal pivot to retain the pedal pivot in its journal notches, against the action of the bias means, during normal operation; the latching means being attached to the sidewalls and additionally, in use, attached to a structure of a vehicle in which the pedal box is installed, which structure is designed for minimal deformation.

The cam member, when released by the sheared rivets, rotates against a fixed form to eject the pivot from the notches.

The journal notches are upwardly open and the cam member embraces the pedal pivot either from the side, or from above, to achieve pedal pivot retention, in normal conditions.

The latching means forms a bridge between two box sidewalls.

The biassing means is at least one spring, preferably a coil spring used in tension or in compression.

The minimal deformation portion of the vehicle is a cross-beam or cowl.

The deforming portion is the dash.

### BRIEF DESCRIPTION OF THE DRAWINGS

Three versions of the first embodiment of pedal box are illustrated diagrammatically in the accompanying drawings, in which:
Figure 1A is a perspective view of a first embodiment;
Figure 1B is a side elevation of the pedal box of Figure 1A;
Figure 2A is a perspective view of a second embodiment;
Figure 2B is a side elevation of the pedal box of Figure 2A;
Figure 3A is a perspective view of a third embodiment; and
Figure 3B is a side elevation of Figure 3A, whilst one version of the second embodiment is illustrated in Figures 4 - 6, in which:
Figure 4 is a general view of the second embodiment of pedal box;
Figure 5 is a side elevation detail of the bridge and cam of Figure 4; and
Figure 6 is a front elevation of cam and pedal retainer of Figure 4.

### DETAILED DESCRIPTION OF THE DRAWINGS

In all three versions of the first embodiment, like reference numerals are employed for like components.

All three versions work on the same principle.

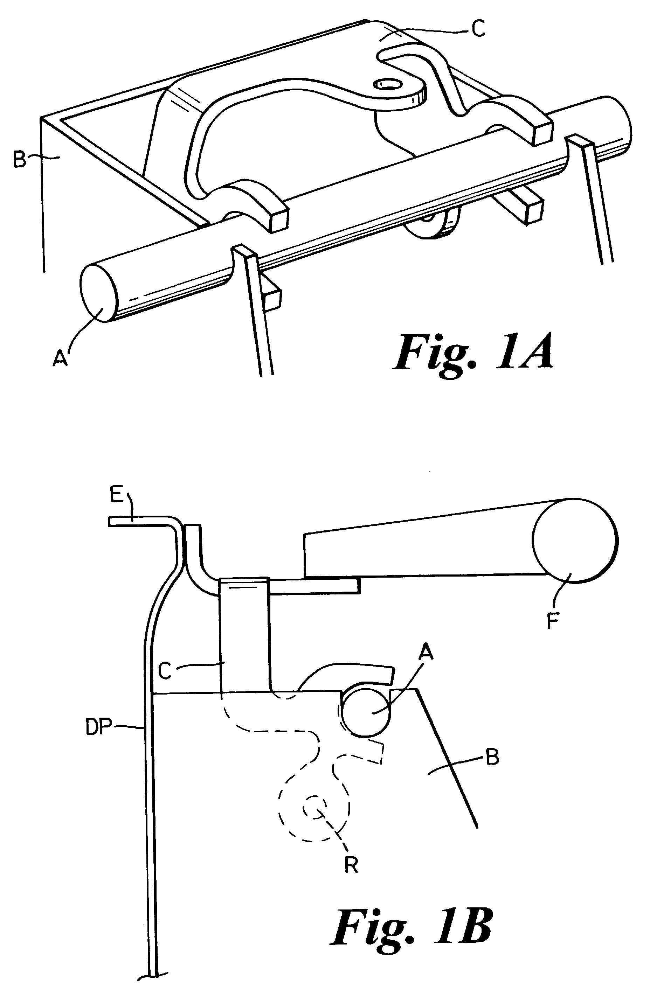

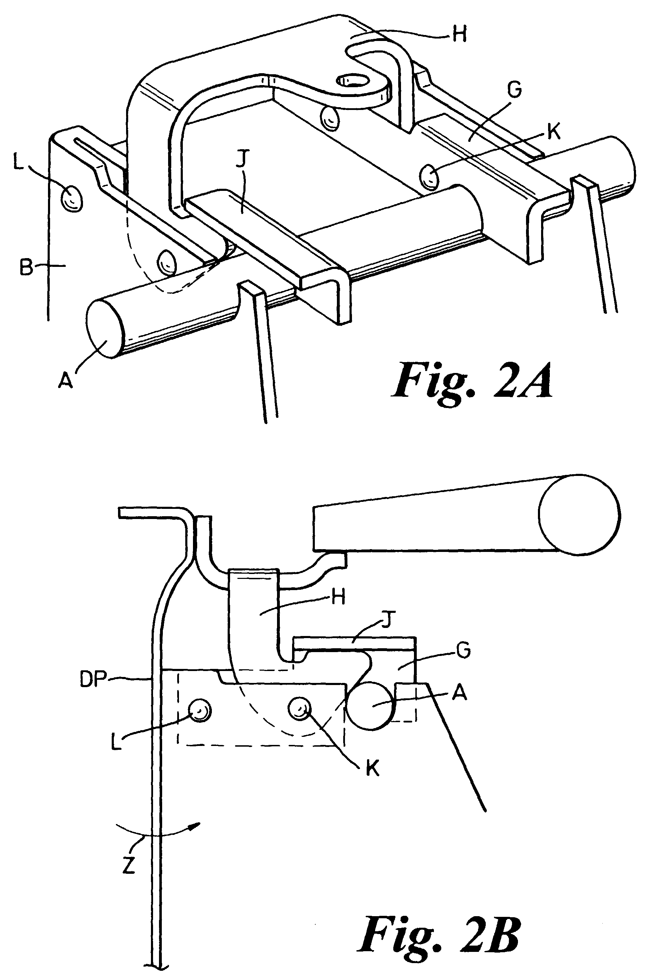

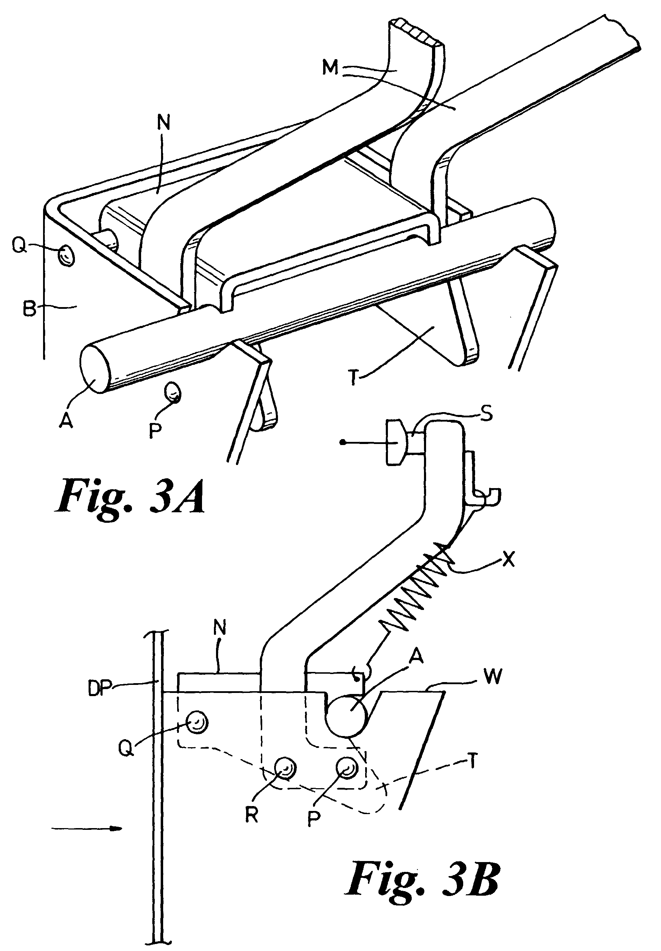

In all embodiments a pedal pivot (A) supporting both the brake and clutch pedal (not shown) is supported in a bracket mounted on the vehicle dash panel and specifically in two-upwardly open "U"-notches that are provided, on a common axis, in spaced-apart sidewalls (B) of the pedal box. Loads due to normal and emergency braking operations (and clutch operation) are taken in varying proportions between this sidewall (B) and pedal box directly and the latch member (C) of Figures 1A and 1B, and (G) of Figures 2A, and 2B, and (N) of Figures 3A and 3B, which retains the pivot shaft in its location within its journal notches. Again, under normal driving operations only minimal loads are applied to the latch member which will move to release the pivot shaft (A) in the impact situation. In accordance release of the pivot shaft (A) and therefore the pedals is caused not by an increase in load applied to the pedals or latch member but by relative deformation of the supporting structure. Thus, in the drawings, the bracket is shown mounted to the dash panel (DP), with the latch member (C), (H) or (N) restrained by attachment to either the cowl (E) above the dash or a beam (F) mounted across the car from the A-posts, both of which are moved a small amount relative to the dash which is connected to chassis members extending to the front of the vehicle and which take any frontal impact. Once the pedal pivot (A) is unlatched by displacement of the latch member resulting from relative deformation upon a frontal impact, the pedal pivot can be ejected from its journal notches by spring action (either extension or compression) to move the potentially dangerous pedal pad away from the driver's limbs. Adjacent areas of metal work can be shaped to promote the optimum pedal movement under the influence of the spring load given that the pedals may still be restrained by the device being actuated (brake booster, brake or clutch master cylinder or clutch cable etc.).

In Figures 1A and 1B, a unitary latch member (C) is shown which is yoke-like and is normally held in place by upper attachment to either the non-deformable cowl (E) or the cross car beam (F) and attached by rivets (R) to each sidewall. In the frontal impact situation, the dash is forced rearwards as indicated whereas the upper mounting point remains relatively static. Thus, latch (C) is deformed at the "plastic hinge" and rotates to allow the pedal pivot to be ejected from its journal notches and hence to escape under loads at the pedal or the attached spring.

Figures 2A and 2B show an alternative version whereby the pedal pivot (A) is latched into its journal notches in the sidewalls by latch component (G) itself rivetted at two places to each sidewall (B). The other latch member portion (H) is attached to the upper mount and held between the bracket and forked arms (G) by the two rivets adjacent to the shaft. Under the influence of the deformation caused by the impact as before and generally in the direction of arrow Z, latch member portion (H) is caused to rotate around the rivets (K) and cam areas at each side to contact the protruding features (J) on (G). Appropriate design of the form of said cam profile ensures high loads are generated, sufficient to shear off the rearmost rivets (K) and release item (G). Under the influence of loads applied at the pedal or the attached spring, item (G) rotates about the remaining rivets (L) to free the shaft from the bracket.

Figures 3A and 3B show another alternative concept whereby the shaft is held in place by member (N). Member (N) is held in place by rivets acting as follows. Large rivets (Q) attach member (N) to the pedal box sidewalls (B). Large rivets (P) attach members (M) to the sidewalls (B). Small rivets (R) attach the member (N) to members (M). Under the relative movement between the dash panel and the upper fixing, members (M) rotate about rivets (P), aided by weakened (in bending) reduced portion (S). This results in shearing of rivets (R) and release of member (N) and the shaft (A) as before. The profile (A) adjacent metal work at (T) and (W) move the shaft (A) towards the driver, under the influence of spring (X). Horizontal restraint of the pedal at the actuation pivot or profile attached to sidewalls (B) below the shaft results in the pedal pad being moved forward in the vehicle, away from the driver's feet.

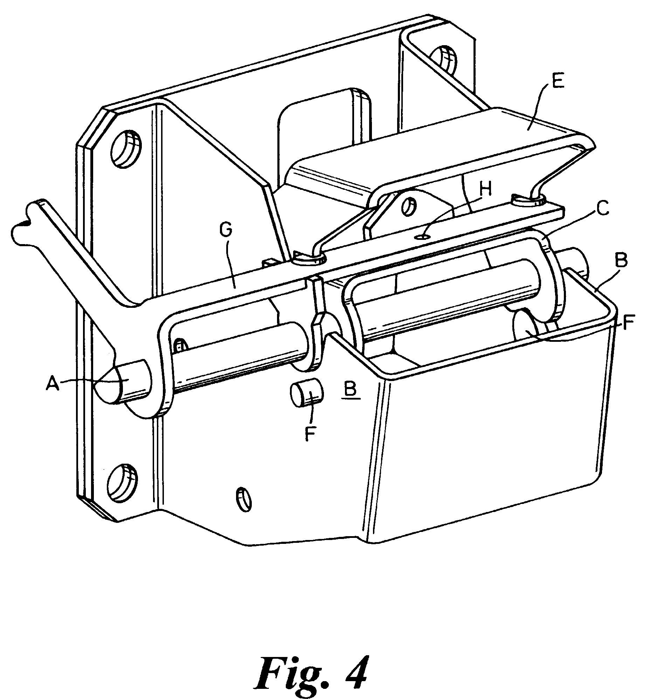

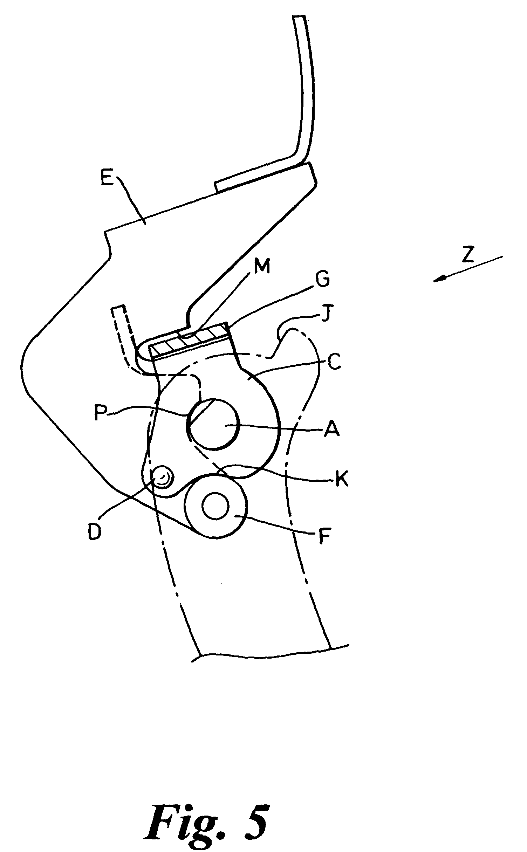

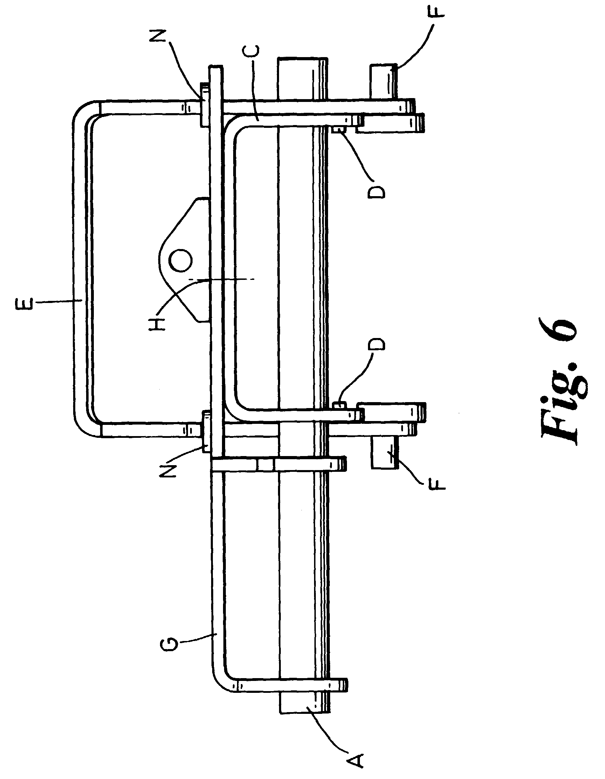

In the second embodiment illustrated in Figures 4- 6, a pedal pivot (A) supporting both the brake and clutch pedals is supported in a bracket mounted on the vehicle dash panel and specifically in two upwardly open "U"-notches that are provided, on a common axis, in spaced-apart sidewalls (B) of the pedal box. Loads due to normal and emergency braking operations (and clutch operations) are taken predominantly by the notches in the sidewalls. The cam member (C) which serves to retain the pivot (A) in the notches and is in turn retained in position by the rivets (D) which connect the cam member to the bridge member (E). At its lower end the bridge member is rotationally connected to the sidewalls (B) of the pedal box by fasteners (F). The bridge member is additionally connected at its upper surface to either the cowl above the dash or a beam mounted across the car from the A-posts, both of which are moved a small amount in a crash situation relative to the dash. The cam member (C) is rotationally connected to the pivot shaft at the outer end, as is the pedal retainer (G) which is held at its upper surface to the cam member by a fastener at (H).

In the crash situation, the process by which the pivot (A) is displaced from the pedal box sidewalls is as follows:- As the dash is deformed towards the driver, the relatively stationary upper fixing rotates the bridge member relative to the pedal box about fasteners (F). Eventually the rivets (D) are sheared by this motion and the cam member is free to move the pivot shaft. Due to the offset application of the spring, either compression or tension and acting in a nominally horizontal direction, the cam member (C) rotates about the pivot (A) axis. Even with a significant load applied to the brake pedal the pivot will roll up the side of the sidewall notches to effect release of the pivot. This upward motion is reinforced by the action of the cam form (@ K) on the lower face of the two side arms of the bridge member against the circular form of the fasteners (F). Thus the profile of the cam form and the rolling action both serve to displace the pivot shaft from engagement in the sidewall notches. Once this is achieved, rotation of the cam member is restrained by contact with the extension to the brake pedal at (J), and further displacement of the spring free end is used to force the pedal shaft towards the driver and hence, with the pedals pivoting about the pushrod location or adjacent metal work in the pedal box, the pedal pad area is moved away from the drivers limbs.

In order to allow the desired movement of the pedals and shaft in the crash situation, the clutch pedal return spring is mounted between the pedal and an extension to the pedal retainer. Thus the whole assembly is free to move and the force in this spring is additionally used to promote the desired rotation of the pivot shaft to disengage same from the pedal box sidewalls. Additional features ensure that the structural integrity of the system is maintained under normal vehicle operation. Rivets (D) are assembled between the bridge and cam members prior to insertion between the main sidewalls of the pedal box ensuring that even if the swaging of the rivets were to fail the rivets are retained in position to maintain retention of the pivot shaft in the sidewall notches. The forms in the bridge member side arms (@ M) act upon the pedal retainer and hence the cam member to force the shaft into the sidewall notches. Resilience in the form of the pedal retainer at the contact points at (N) serve to take up tolerances and eliminate any free play in the pivot shaft retention. In addition the form in the bridge member sidewalls (@ M) is centred about the rotation centre of the bridge member (fasteners F) which allows the bridge member to take up tolerances in the upper fixing point without affecting this retention. Under the crash deformations, rotation of the cam member takes this clear of this form to allow upward movement of the pivot shaft. As a further addition, the bridge member side arm form at (P) will serve to retain the pivot shaft in position while the dash to upper mount dimension remains underformed. The size of this retention area is limited by the need to allow the pivot shaft freedom of movement when the bridge member rotates under crash deformation, but it does give an extra degree of safety in ensuring that the pivot shaft cannot fully disengage from the pedal box notches without significant crash deformations, even if other features already described were to fail.

## Claims

1. A pedal box for a vehicle, comprising:
**(i)** a pedal pivot;
**(ii)** means to bias the pedal pivot from pivotal location within the pedal box;
**(iii)** displaceable latching means operative, in a non-displaced condition, to resist said bias during normal operating conditions of the pedal box, and in a displaced condition to permit ejection of the pedal pivot from the pedal box;
**(iv)** means to secure the pedal box to a portion of the vehicle designed to deform upon a frontal impact, and
**(v)** means to secure the latching means to a portion of the vehicle designed to minimise deformation upon a frontal impact.
whereby relative movement, upon a frontal impact, between the deformable and minimal deformable portions results in said displacement of the latching means.

2. A pedal box as claimed in Claim 1, wherein the pedal box comprises a pair of spaced-apart sidewalls.

3. A pedal box as claimed in Claim 2, wherein a journal notch for the pedal pivot is provided in each sidewall on a common axis, the pedal pivot spanning the sidewalls and being pivotally located in the journal notches.

4. A pedal box as claimed in any preceding Claim, wherein the means to bias the pedal pivot is effective in an ejecting direction, out of the journal notches.

5. A pedal box as claimed in Claim 2, and any Claim appended thereto, wherein the latch member, comprises at least one fork element adapted to engage the pedal pivot to retain the pedal pivot in its journal notches, against the action of the bias means, during normal operation; the latch member being attached to the sidewalls and additionally, in use, attach to a structure of a vehicle in which the pedal box is installed, which structure is designed for minimal deformation.

6. A pedal box as claimed in Claim 3 and any Claim appended thereto, wherein the journal notches are upwardly open and the fork element(s) of the latch member embrace the pedal pivot either from the side, or from above, to achieve pedal pivot retention, in normal conditions.

7. A pedal box as claimed in Claim 5, wherein the latch member is provided with two spaced-apart fork members.

8. A pedal box as claimed in any preceding Claim, wherein the biassing means is at least one spring, preferably a coil spring used in tension or in compression.

9. A pedal box as claimed in any preceding Claim, wherein the minimal deformation portion of the vehicle is a cross-beam or cowl.

10. A pedal box as claimed in any preceding Claim, wherein the deforming portion is the dash.

11. A pedal box as claimed in any one of Claims 1 to 4, wherein the latching means is joined to a cam member (by shearable rivets) adapted to engage the pedal pivot to retain the pedal pivot in its journal notches, against the action of the bias means, during normal operation; the latching means being attached to the sidewalls and additionally, in use, attached to a structure of a vehicle in which the pedal box is installed, which structure is designed for minimal deformation.

12. A pedal box as claimed in Claim 11, wherein the cam member, when released by the sheared rivets, rotates against a fixed form to eject the pivot from the notches.

13. A pedal box as claimed in Claim 11 or 12, wherein the journal notches are upwardly open and the cam member embraces the pedal pivot either from the side, or from above, to achieve pedal pivot retention, in normal conditions.

14. A pedal box as claimed in any one of Claims 11 to 13, wherein the latching means forms a bridge between two box sidewalls.

15. A pedal box as claimed in any one of Claims 11 to 14, wherein the biassing means is at least one spring, preferably a coil spring used in tension or in compression.

16. A pedal box as claimed in any one of Claims 11 to 15, wherein the minimal deformation portion of the vehicle is a cross-beam or cowl.

17. A pedal box as claimed in any one of Claims 11 to 16, wherein the deforming portion is the dash.

18. A motor vehicle comprising a pedal box in accordance with the first aspect, with the pedal box secured to a portion of the vehicle that is designed to deform or crumple and move towards the driver in the event of a frontal impact, with the latching means connected to a portion of the vehicle that is designed to minimise deformation and to remain stable in the event of a frontal impact, whereby relative deformation upon frontal impact results in displacement of the latching means permitting ejection of the pedal pivot from its pivotal location within the pedal box by its biassing means.
